# EUROPEAN PATENT SPECIFICATION

(11) **EP 4 402 386 B1**
(45) Date of publication and mention of the grant of the patent: **27.05.2026**
(21) Application number: 22789679.2
(22) Date of filing: 16.09.2022
(51) Int. Cl.: F16B 19/10

(54) **SINGLE-SIDE FASTENER**
EINSEITIGES BEFESTIGUNGSELEMENT
ÉLÉMENT DE FIXATION À UN SEUL CÔTÉ

(30) Priority: 16.09.2021 GB 202113220; 16.09.2021 GB 202113223; 16.09.2021 GB 202113225
(43) Date of publication of application: 24.07.2024
(60) Divisional application: 25192767.9
(73) Proprietor: Kwikbolt Limited, Isleworth, TW7 6ER (GB)
(72) Inventor: NIKLEWICZ, Jan, Isleworth Greater London TW7 6ER (GB)
(74) Representative: Williams, Ben
(86) International application number: PCT/IB2022/058782
(87) International publication number: WO 2023/042154

(56) References cited:
- EP-B1- 3 108 148
- US-A1- 2019 211 862
- US-A1- 2020 063 782
- US-A1- 2020 347 867
- US-B2- 10 982 701

## Description

### Field of the Invention

This invention relates in general to the field of fasteners for use in clamping components and, in particular, to a temporary single-sided fastener which can be used in apertures where it is not possible to access the reverse of the components.

### Background of the Invention

Temporary fasteners are used during the fabrication of complex structures such as aircraft frames to align components before permanent fasteners are installed. The number and location of the temporary fastenings will vary between applications, but for a typical wing set, i.e. two complete wings, for a large commercial passenger aircraft, the number of temporary fastenings used can reach around 25,000. It is convenient for such temporary fasteners to be operated from one side of the work-piece only, i.e. to insert and activate the fastener from above the work-piece without having to hold a part of the fastener from the underside of the work-piece, as would be the case for a nut and bolt, because often it is not possible to access both sides of the pieces being clamped simultaneously.

Fasteners that operate from one side are called "blind" fasteners and they typically can have a threaded part that carries a set of expandable legs. In some examples, the legs have protruding heads for applying the clamping load and the legs can be expanded when inserted into an aperture and drawn towards the work-piece by rotation of the threaded part until the desired clamping load is achieved. When the fastener is no longer required, the legs can be retracted to allow removal of the fostered by rotation of the threaded part in the opposite direction.

However, a problem with known fasteners is that the fasteners can be damaged upon removal by over-rotation of the threaded part in the loosening direction. In particular, the use of mechanical means for rotation of the threaded part, e.g. an air impact wrench, can cause damage to the threaded part of the fastener. Existing attempts to solve this problem result in a relative movement between a rotatable head of the threaded portion and a main body of the fastener. Such relative movement can cause difficulty in positioning a rotary tool for rotation of the threaded part, especially for automated systems.

A fastening system with a free-spin feature is described in US2020/0063782 where a leg unit is biased towards the threads of a bolt by a spring. The bolt is not captive in the fastener body though because it is removable.

A single-sided fastener is described in US10,982,701. Similarly, legs are biased towards the threads of a bolt by a spring. Again, the bolt can move in relation to the fastener body.

Another single-sided fastener is described in US2019/0211862. The bolt is free to move within the fastener body.

Fasteners with bolts that are free-floating can cause problems with accurately locating the bolt in the fastener body.

As such, there is a need for an improved single-sided fastener. The present invention aims to address this need.

### Summary of the Invention.

According to a first aspect of the present invention, there is provided a fastener according to claim 1.

According to a second aspect of the present invention, there is provided a method of fastening a work piece according to claim 11.

Optional features are as set out in the dependent claims.

### Brief Description of the Drawings.

For a better understanding of the present invention and to show more clearly how it may be carried into effect, reference will now be made by way of example only, to the accompanying drawings, in which:
Figure 1 is schematic diagram showing the components of a fastener according to an embodiment;
Figure 2 is a schematic diagram showing a side elevation cross-section of a fastener according to an embodiment;
Figure 3 is a schematic diagram showing a side elevation cross-section of a fastener according to an embodiment;
Figure 4 is a schematic diagram showing a side elevation cross-section of a fastener according to an embodiment;
Figure 5 is a schematic diagram showing a fastener in use according to an embodiment;
Figure 6 is a schematic diagram showing a side elevation cross-section of a fastener in use according to an embodiment;
Figure 7 is a schematic diagram showing a side elevation cross-section of a fastener in use according to an embodiment; and
Figure 8 is a schematic diagram showing a side elevation cross-section of a fastener in use according to an embodiment.

### Detailed Description of the Invention.

The present invention relates to a fastener. In particular, the invention relates to a single-sided temporary fastener including a free-spin feature, which can prevent damage to the fastener on removal.

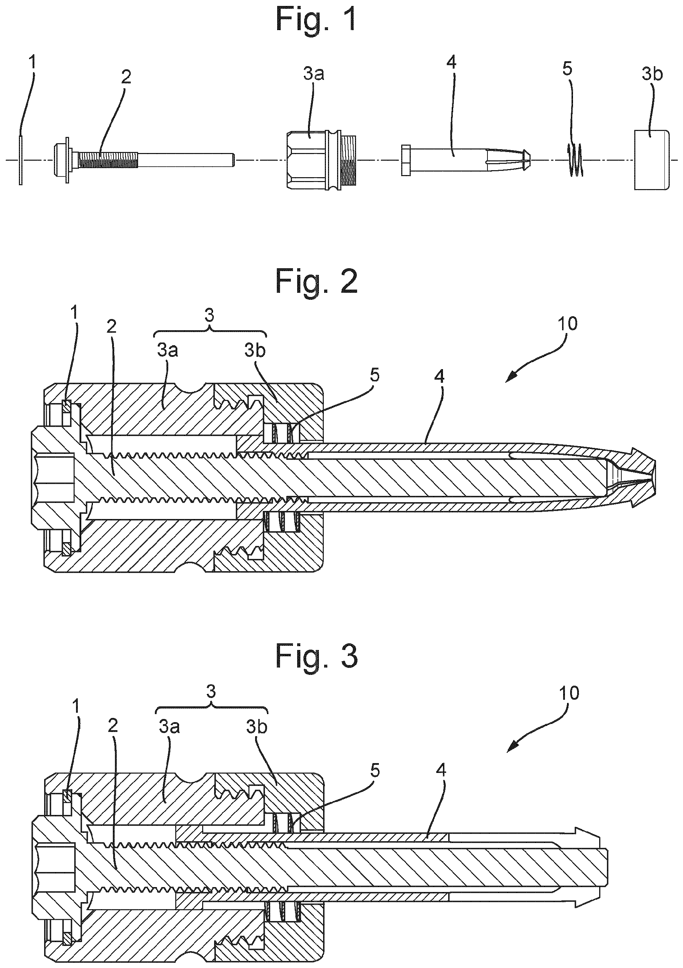

Figure 1 of the accompanying drawings shows a fastener 10 comprising a retaining ring 1, a bolt 2, a first hollow tubular body part 3a, a hollow leg member 4, a spring 5 and a second hollow tubular body part 3b. Each of the components has a central axis, about which the component is substantially symmetric. The components are configured to form the fastener 10 when assembled. In some examples, the central axis of each component is aligned when the fastener 10 is assembled. Each of the components has a distal end, defined as the end furthest from the user in normal use, and a proximal end defined as the end closest to the user in normal use. The assembled fastener 10 has a corresponding distal end and proximal end.

The retaining ring 1 has a ring shape with a central opening. In some embodiments, the retaining ring 1 may have a substantially flat profile. In some examples, the retaining ring 1 may be a stamped circlip or a spiral snap ring, e.g. a Spiralox^{®} retaining ring.

The bolt 2 has a substantially cylindrical shape. The bolt 2 has a proximal end and a distal end. The bolt 2 comprises a threaded portion at the proximal end. In some embodiments, the bolt 2 may have an external thread. A thread of the threaded portion may extend radially outwards from a central cylindrical portion. Alternatively, the thread may be cut radially inwards into the central cylindrical portion. The threaded portion of the bolt 2 is configured to engage with a threaded portion of the hollow leg member 4.

According to the invention, the proximal end of the bolt 2 has a flange. The flange of
the bolt 2 may be configured to engage with the first hollow tubular body part 3a to limit a position of the bolt 2.

The first hollow tubular body part 3a is configured to form a hollow tubular body 3 with the second hollow tubular body part 3b. The first hollow tubular body part 3a may be referred to as a proximal tube. The second hollow tubular body part 3b may be referred to as a cap. In some embodiments, the first hollow tubular body part 3a and second hollow tubular body part 3b may be screwed together. Alternatively, the first hollow tubular body part 3a and second hollow tubular body part 3b by a press-fit, welding, adhesive any other suitable means. In some embodiments, the hollow tubular body 3 is formed as a single piece.

The hollow tubular body 3 has a proximal end and a distal end. The proximal end may be formed by the first hollow tubular body part 3a and the distal end may be formed by the second hollow tubular body part 3b. The distal end of the hollow tubular body 3 may be a flat surface perpendicular to the central axis or may have a conical (or "countersunk") profile. The hollow tubular body 3 has a central axis. In some embodiments, the central axis of the hollow tubular body 3 defines the central axis of the fastener 10. The hollow tubular body 3 has a central opening extending along the central axis from the proximal end to the distal end. The hollow tubular body 3 is configured to receive the retaining ring 1, the bolt 2, the hollow leg member 4 and the spring 5 within the central opening.

The hollow leg member 4 has a hollow, substantially cylindrical form. The hollow leg member 4 has a proximal end and a distal end. The hollow leg member 4 comprises a flange at the proximal end, a threaded portion at the proximal end and a plurality of resilient legs at the distal end. The flange extends radially outwards from the proximal end of the flange. In some embodiments, the flange of the hollow leg member 4 may include a flat surface perpendicular to the central axis of the fastener. The flat surface of the flange may face the distal direction.

Each of the resilient legs of the hollow leg member 4 has a head at the distal end. The head may be formed as a flange portion extending radially outwards from the leg. The head of each leg is configured to engage with a work-piece. For example, the head of each leg may be arranged to engage with a distal side of the work piece. As will be described later, the head may be configured to transfer a compressive force to the work piece.

In some embodiments, the resilient legs of the hollow leg member 4, may be formed to extend distally from the distal end of the hollow leg member 4. Alternatively, the legs may be formed by dividing the distal end of the hollow leg member 4. A portion of material may be removed from the hollow leg member 4 between each of the legs.

Each of the resilient legs of the hollow leg member is biased radially inwards towards the central axis. That is, the distal ends of the resilient legs may be angled or curved radially inwards towards the central axis. The resilient legs may be formed of a resilient material such that each of the legs can be deflected inwards or outwards by a deflecting force. Provided the amount of deflection does not exceed a material limit, the resilient legs may be configured to return to the original biased position if the deflecting force is removed. In some examples, the resilient legs may be biased by, for example, inward deflection of the legs beyond the material limit, or by applying heat treatment while the legs are restrained in the biased position, or by any suitable process.

In some embodiments, the spring 5 may be a compressive spring. In some examples, the spring 4 may an open coil spring, a disc spring, or any other suitably resilient or elastic element. The spring 5 may be configured to fit around the hollow leg member 4.

Figure 2 of the accompanying drawings shows a fastener 10 in assembled form. As shown, the central axis of each component is aligned when the fastener 10 is assembled.

As shown, the first hollow tubular body part 3a may form a hollow tubular body 3 with the second hollow tubular body part 3b. The first hollow tubular body part 3a and second hollow tubular body part 3b may be screwed together.

The hollow tubular body 3 has a proximal end and a distal end. The proximal end may be formed by the first hollow tubular body part 3a and the distal end may be formed by the second hollow tubular body part 3b. The distal end of the hollow tubular body 3 may be a flat surface perpendicular to the central axis or may have a conical (or "countersunk") profile. The hollow tubular body 3 has a central axis. In some embodiments, the central axis of the hollow tubular body 3 defines the central axis of the fastener 10. The hollow tubular body 3 has a central opening extending along the central axis from the proximal end to the distal end. As shown, each of the retaining ring 1, the bolt 2, the hollow leg member 4 and the spring 5 are at least partially received within the central opening.

The bolt 2 has a substantially cylindrical form. As shown, the bolt 2 may be arranged within the central opening of the hollow tubular body 3. The bolt 2 may extend by a distance beyond the distal end of the hollow tubular body 3. In some examples, the proximal end (or "head") of the bolt 2 may protrude from the proximal end of the hollow tubular body 3. Alternatively, the head of the bolt 2 may be within the proximal end of the central opening. The proximal end of the bolt 2 may include an engaging element configured to engage with a rotary tool. For example, the head of the bolt 2 may be formed with a polygonal, e.g. hexagonal or square, shape for engagement with a wrench, or may include a socket or recess having a shape for engagement with a socket wrench, key, or screwdriver e.g. a hexagonal, triangular, square, linear, cross or star shaped recess.

According to the invention, the proximal end of the bolt 2 has a flange. The flange may be formed to extend radially outwards from the cylindrical body of the bolt 2. The flange of the bolt 2 may be configured to engage with the first hollow tubular body part 3a to limit a position of the bolt 2. According to the invention, the hollow tubular body 3 has a shoulder arranged to block the bolt 2 from moving in a distal direction. As shown, the shoulder may be formed in the first hollow tubular body part 3a. The shoulder may be formed to extend radially inwards into the central opening of the hollow tubular body 3. The shoulder is arranged to engage with the flange of the bolt 2, to fix the bolt in position with respect to the hollow tubular body 3.

According to the invention, the hollow tubular body 3 has a retaining means configured to engage with the flange of the bolt 2 and block the bolt 2 from moving in a proximal direction. For example, the first hollow tubular body part 3a may comprise a lip extending radially inwards into the central opening at or near the proximal end. In some embodiments, as shown, the retaining means may be provided by the retaining ring 1.

The retaining ring 1 has a ring shape with a central opening. In some embodiments, the retaining ring 1 may have a substantially flat profile. In some examples, the retaining ring 1 may be a stamped circlip or a spiral snap ring, e.g. a Spiralox retaining ring. As shown, the first hollow tubular body part 3a may comprise a retaining groove arranged to receive the retaining ring 2. The retaining groove may be positioned distally from the shoulder. The retaining ring 1 may be positioned in the retaining groove of the first hollow tubular body part 3a, and the flange of the bolt 2 may be located between the retaining ring 1 and the shoulder of the hollow tubular body 3.

The bolt 2 comprises a threaded portion at the proximal end. In some embodiments, the bolt 2 may have an external thread. A thread of the threaded portion may extend radially outwards from a central cylindrical portion. Alternatively, the thread may be cut radially inwards into the central cylindrical portion. The threaded portion of the bolt 2 is configured to engage with a threaded portion of the hollow leg member 4.

The hollow leg member 4 has a hollow, substantially cylindrical form. The hollow leg member comprises a plurality of resilient legs at the distal end. In some embodiments, the resilient legs of the hollow leg member 4, may be formed to extend distally from the distal end of the hollow leg member 4. Alternatively, the legs may be formed by dividing the distal end of the hollow leg member 4. A portion of material may be removed from the hollow leg member 4 between each of the legs.

As shown, the hollow leg member 4 may be arranged within the central opening of the hollow tubular body 3. The hollow leg member 4 may extend by a distance beyond the distal end of the hollow tubular body 3. The hollow leg member is translatable within the hollow tubular body 3 along the central axis of the hollow tubular body 3.

The hollow leg member 4 comprises a flange at the proximal end. The flange extends radially outwards from the proximal end of the flange. In some embodiments, the flange of the hollow leg member 4 may include a flat surface perpendicular to the central axis of the fastener. The flat surface of the flange may face the distal direction.

The hollow tubular body 3 comprises a stop portion extending radially inwards at the distal end. For example, the second hollow tubular body part 3b may be formed with a lip extending radially inwards into the central opening of the hollow tubular body 3. In some embodiments, the stop portion of the hollow tubular body 3 may have a corresponding flat surface perpendicular to the central axis of the fastener. The flat surface of the stop portion may face the proximal direction.

The spring 5 is arranged between the flange of the hollow leg member 4 and the stop portion of the hollow tubular body 3. In some embodiments, the spring 5 may be a compressive spring. In some examples, the spring 4 may an open coil spring, a disc spring, or any other suitably resilient or elastic element. The spring 5 may be configured to fit around a cylindrical portion of the hollow leg member 4 and abut with the distally facing flat surface of the flange. The spring 5 is configured to urge the hollow leg member 4 in a proximal direction with respect to the hollow tubular body 3. For example, the spring 5 may be configured to exert a force on the distally facing flat surface of the hollow leg member 4 and the proximally facing flat surface of the hollow tubular body 3.

In this way, the spring 5 and/or the stop portion of the hollow tubular body 3 may be configured to block the hollow leg member 4 from moving in the distal direction. In some embodiments, the distal ends of the legs may extend beyond the distal end of the bolt 2 when the hollow leg member 4 is in the most distal position, as shown in Fig. 2.

Each of the resilient legs of the hollow leg member 4 is biased radially inwards towards the central axis. That is, the distal ends of the resilient legs may be angled or curved radially inwards towards the central axis. In some examples, the resilient legs may be biased by, for example, inward deflection of the legs beyond the material limit, or by applying heat treatment while the legs are restrained in the biased position, or by any suitable process. As shown, a portion of the resilient legs which extends beyond the distal end of the bolt 2 may be angled or curved radially inwards.

The hollow leg member 4 comprises a threaded portion at the proximal end. In some embodiments, the hollow leg member 4 may have an internal thread. For example, the hollow leg member 4 may include a thread extending radially inwards from an inner wall of the hollow cylindrical form. Alternatively, the thread may be cut radially outwards into the inner wall of the hollow cylindrical form.

The threaded portion of the bolt 2 is configured to engage with a threaded portion of the hollow leg member 4. In this way, rotation of the bolt 2 in a first direction draws the hollow leg member 4 in a proximal direction along the central axis. The first direction may be referred to as a fastening, tightening or clamping direction. In some examples, the first direction may be clockwise from the perspective of the user. Alternatively, the first direction may be anti-clockwise. By rotation of the bolt 2 in the first direction, the hollow leg member 4 may be translated in a proximal direction relative to the bolt 2. The hollow leg member 4 may also be translated in a proximal direction relative to the hollow tubular body 3. In some examples, the hollow leg member 4 may be drawn further within the central opening of the hollow tubular body 3. In some examples, the resilient legs of the hollow leg member 4 may be moved in a proximal direction towards or past the distal end of the hollow tubular body 3.

Figure 3 of the accompanying drawings shows the fastener 10 after rotation of the bolt 2 in the first direction. As shown, the hollow leg member 4 is translated in a proximal direction relative to the bolt 2. The resilient legs of the hollow leg member 4 do not extend beyond the distal end of the bolt 2. In this position, the distal end of the bolt 2 is configured to urge the resilient legs of the hollow leg member radially outwards.

In some embodiments, the resilient legs may be formed of a resilient material such that each of the legs can be deflected inwards or outwards by a deflecting force, e.g. by the bolt 2. Provided the amount of deflection does not exceed a material limit, the resilient legs may be configured to return to the original biased position if the deflecting force is removed.

Each of the resilient legs of the hollow leg member 4 has a head at the distal end. The head may be formed as a flange portion extending radially outwards from the leg. As shown, when the resilient legs are deflected outwards by the bolt 2, the head of each leg may protrude outwards beyond the radial extent of the hollow leg member 4.

The head of each leg is configured to engage with a work-piece. For example, the head of each leg may be arranged to engage with a distal side of the work piece. In some examples, the flange portion forming the head of each leg may include a flat surface which is presented perpendicular to the central axis and proximally facing when the hollow leg member 4 is in the position shown in Fig. 3. As will be described later, the head of each resilient leg may be configured to transfer a compressive force to the work piece.

Rotation of the bolt 2 in a second direction opposite to the first direction is configured to translate the hollow leg member 4 in a distal direction along the central axis. The second direction may be referred to as an unfastening, loosening or detaching direction. In some examples, where the first direction is clockwise from the perspective of the user, the second direction may be anti-clockwise and vice versa. By rotation of the bolt 2 in the second direction, the hollow leg member 4 may be translated in a distal direction relative to the bolt 2. The hollow leg member 4 may also be translated in a distal direction relative to the hollow tubular body 3. In some examples, the hollow leg member 4 may be pushed further out of the central opening of the hollow tubular body 3. In some examples, the resilient legs of the hollow leg member 4 may be moved in a distal direction away from the distal end of the hollow tubular body 3.

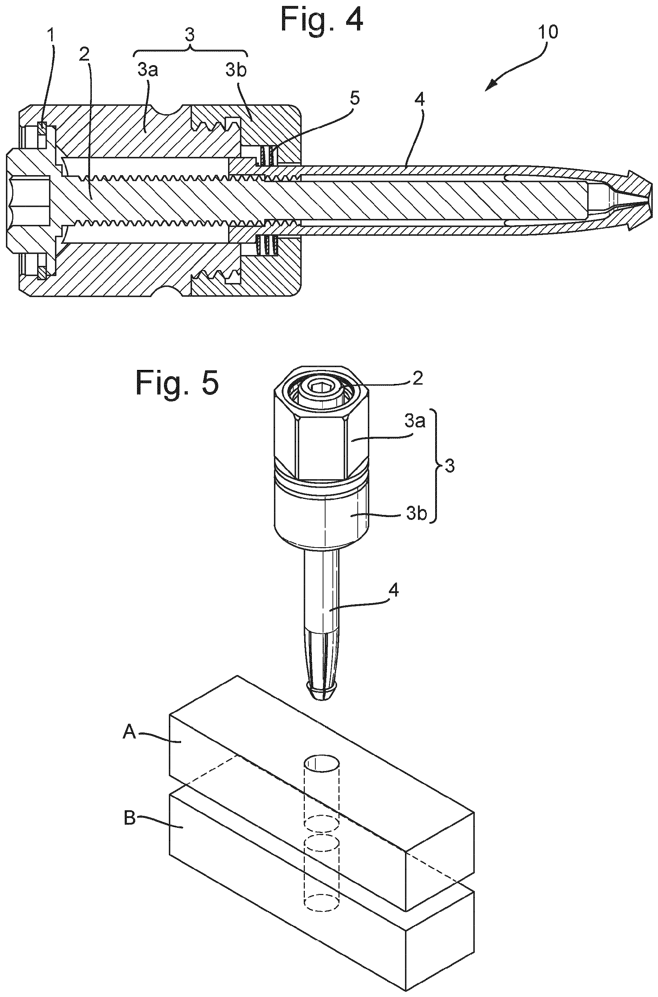

Figure 4 of the accompanying drawings shows the fastener 10 after rotation of the bolt 2 in the second direction. Rotation of the bolt 2 in the second direction may first return the fastener 10 to the configuration of Fig. 2, and further rotation may lead to the configuration of Fig. 4.

As shown, the hollow leg member 4 is translated in a distal direction relative to the bolt 2. The resilient legs of the hollow leg member 4 extend beyond the distal end of the bolt 2. In this position, the distal end of the bolt 2 does not urge the resilient legs of the hollow leg member radially outwards. In some embodiments, the resilient legs may be formed of a resilient material such that each of the legs can be deflected inwards or outwards by a deflecting force. Provided the amount of deflection caused by the bolt 2 has not exceeded a material limit, the resilient legs may be configured to return to the original biased position when the bolt 2 is removed.

Rotation in the second direction causes the threaded portion of the hollow leg portion 4 to disengage from the threaded portion of the bolt 2. As the threaded portion of the bolt 2 is at the proximal end of the bolt 2, the threaded portion of the hollow leg portion 4 may be translated distally out of the threaded portion of the bolt 2. In this way, the threaded portion of the hollow leg portion 4 can be disengaged from the threaded portion of the bolt 2. In this configuration, the bolt 2 can be freely rotated in the second direction. In this way, damage caused to the fastener by over-rotation of the bolt 2 in the second direction can be avoided.

The spring 5 is configured to urge the hollow leg member 4 in a proximal direction with respect to the hollow tubular body 3. Further rotation of the bolt 2 in the second direction may push the hollow leg member 4 against the spring 5, compressing the spring 5 as shown. The spring 5 may maintain a contact between the thread of the bolt 2 and the thread of the hollow leg member 4. A user with a manual rotary tool may feel a clicking sensation when further rotating the bolt 2 in the second direction. In some embodiments, the spring 5 may be configured to urge the hollow leg member into a position of engagement. In the position of engagement, the threaded portion of the hollow leg member 4 may be engaged with the threaded portion of the bolt 2.

As shown, rotation of the bolt 2 in the first direction may cause the threaded portion of the hollow leg member 4 to engage with the threaded portion of the bolt 2. In this way, the spring 5 can cause immediate engagement of the threads when required. Movement of the bolt 2 with respect to the hollow tubular body 3 is not required to engage the threads. In this way, there is no movement or 'float' in the distal end of the bolt 2, relative to the hollow tubular body 3. As such, the fastener 10 can enable an automated system to more efficiently locate the head of the bolt 2, and engage a rotary tool to tighten the fastener 10.

Figure 5 of the accompanying drawings shows an exemplary fastener 10 in position to clamp a workpiece with two parts, A and B. An opening is prepared through part A and part B. The hollow leg member 4 can pass through the opening, but the hollow tubular body 3 is larger than the opening.

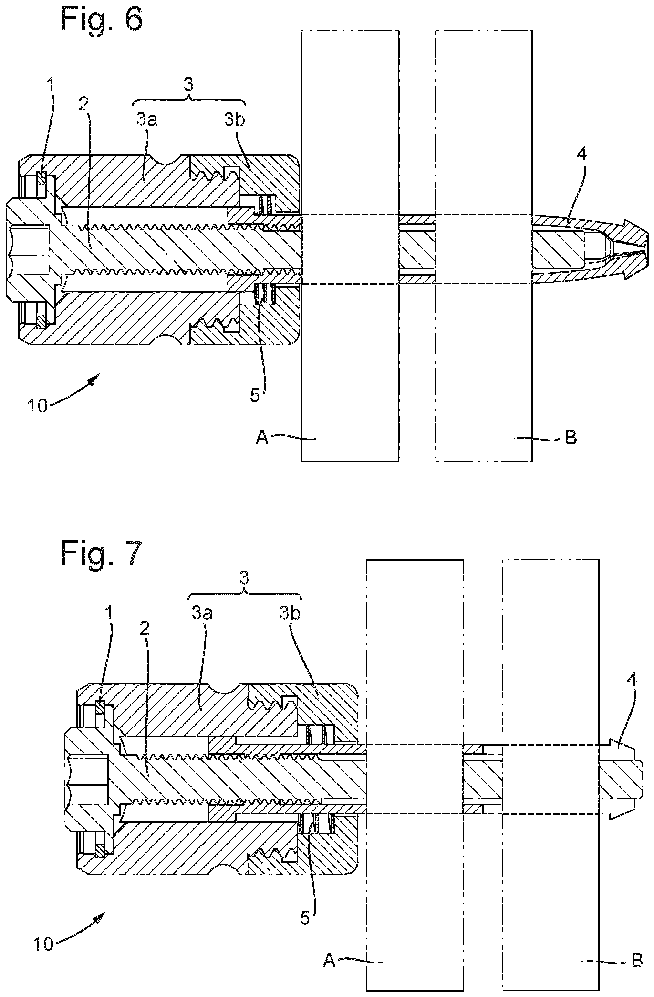

Figure 6 of the accompanying drawings shows an exemplary fastener 10 in position and ready for clamping. The hollow leg member 4 extends through the openings in part A and part B.

As shown, the fastener is in the configuration shown in Fig. 4. The hollow leg member 4 is in the most distal position and the distal ends of the legs extend beyond the distal end of the bolt 2. Each of the resilient legs of the hollow leg member 4 is biased radially inwards towards the central axis. As shown, a portion of the resilient legs,which extends beyond the distal end of the bolt 2 may be angled or curved radially inwards. In this way, the head at the distal end of each resilient leg can pass through the openings in the work piece.

A distal face of the hollow tubular body 3 abuts with a proximal face of part A. The spring 5 urges the hollow leg member 4 in a proximal direction relative to the hollow tubular body 3. In this way, the spring 5 causes engagement of the threaded portion of the hollow leg member 4 with the threaded portion of the bolt 2. As such, there is no free movement or 'float' along the central axis between the threaded portions. Rotation of the bolt 2 in the first direction will immediately engage the threaded portions. In addition, there is no free movement of the bolt 2 with respect to the hollow tubular body 3. As such, an automatic system may easily locate the head of the bolt 2, and engage a rotary tool to tighten the fastener 10.

Figure 7 of the accompanying drawings shows an exemplary fastener 10 in a partially clamped position.

As shown, the hollow leg member 4 is translated in a proximal direction relative to the bolt 2. The resilient legs of the hollow leg member 4 do not extend beyond the distal end of the bolt 2. In this position, the distal end of the bolt 2 is configured to urge the resilient legs of the hollow leg member radially outwards.

Each of the resilient legs of the hollow leg member 4 has a head at the distal end. The head may be formed as a flange portion extending radially outwards from the leg. As shown, when the resilient legs are deflected outwards by the bolt 2, the head of each leg may protrude outwards beyond the radial extent of the hollow leg member 4. The head of each leg may protrude outwards beyond the opening in part B. In this configuration, the fastener 10 cannot be withdrawn from the workpiece.

The head of each leg is configured to engage with the work-piece. For example, the head of each leg may be arranged to engage with a distal side of part B and transfer a compressive force to part B. The flange portion forming the head of each leg may include a flat surface, which is presented perpendicular to the central axis and arranged to abut with the distal face of part B.

The spring 5 causes engagement of the threaded portion of the hollow leg member 4 with the threaded portion of the bolt 2, such that rotation of the bolt 2 in the first direction will immediately engage the threaded portions. In this way, a grip range of the fastener 10 can be improved. As soon as the head of each resilient leg can engage a distal face of the work piece, each head exert a compressive force on the work piece. This compressive force can be applied from virtually the most distal position of the hollow leg member 4, as the threaded portions of the fastener 10 are engaged by the spring 5.

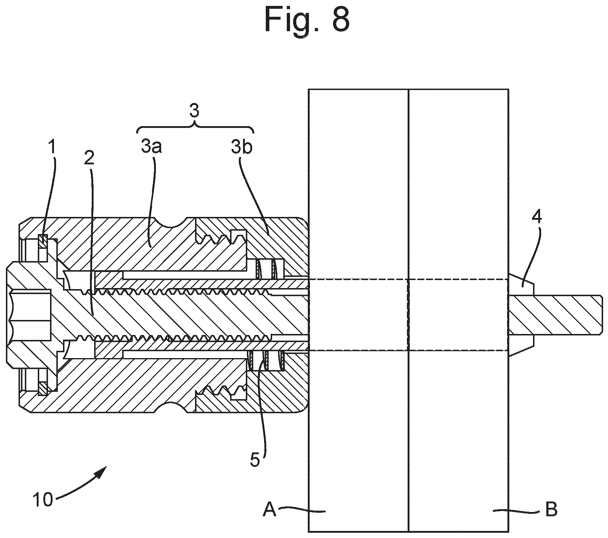

Figure 8 of the accompanying drawings shows an exemplary fastener 10 in a fully clamped position. A compressive force is applied between a distal face of the hollow tubular body 3 and a proximally facing flat surface formed on the resilient legs of the hollow leg member 4.

Although aspects of the invention herein have been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the invention as defined by the appended claims.

## Claims

1. A fastener comprising;
a hollow tubular body (3) with a proximal end and a distal end and a central axis, comprising a stop portion extending radially inwards at the distal end,
a hollow leg member (4) having a proximal end and a distal end, the hollow leg member being translatable within the body along the central axis of the body, the hollow leg member having a flange at the proximal end, a threaded portion at the proximal end and a plurality of resilient legs at the distal end and wherein each leg has a head at the distal end for engaging with a work-piece, and each leg is biased radially inwards towards the central axis,
a bolt (2) having a proximal end and a distal end, with a threaded portion at the proximal end for engaging with the threaded portion of the hollow leg member, such that rotation of the bolt in one direction draws the hollow leg member in a proximal direction along the central axis and rotation in the other direction causes the threaded portion of the hollow leg portion to disengage from the threaded portion of the bolt, wherein the distal end of the bolt is configured to urge the legs radially outward; and
a spring (5) arranged between the flange of the hollow leg member and the stop portion of the hollow tubular body and configured to urge the hollow leg member in a proximal direction with respect to the hollow tubular body, wherein the proximal end of the bolt has a flange configured to fix the bolt in position with respect to the hollow tubular body, and the hollow tubular body has a shoulder arranged to block the bolt from moving in a distal direction, **characterized in that** the hollow tubular body has a retaining means (1) configured to engage with the flange of the bolt and block the bolt from moving in a proximal direction.

2. The fastener of claim 1, wherein the flange of the hollow leg member includes a flat surface perpendicular to the central axis of the fastener and the and the stop portion of the hollow tubular body has a corresponding flat surface perpendicular to the central axis of the fastener.

3. The fastener of claim 1 or claim 2, wherein the distal ends of the legs extend beyond the distal end of the bolt when the hollow leg member is in the most distal position.

4. The fastener of any preceding claim, wherein the spring is configured to urge the hollow leg member into a position of engagement in which the threaded portion of the hollow leg member is engaged with the threaded portion of the bolt.

5. The fastener of any preceding claim, wherein the hollow leg member has an internal thread.

6. The fastener of any preceding claim, wherein the bolt has an external thread.

7. The fastener of any preceding claim, wherein the hollow tubular body is formed in two parts, a proximal tube (3a) and a distal cap (3b), which are screwed together.

8. The fastener of any preceding claim, wherein the spring is an open coil spring, or a disc spring.

9. A method of fastening a work piece using the fastener of any preceding claim, comprising:
passing the hollow leg member through an opening in the work piece; and
rotating the bolt in a first direction, where rotation of the bolt in the first direction draws the hollow leg member in a proximal direction along the central axis, until the head of each leg of the hollow leg member engages with the work piece.

## Patentansprüche

1. Befestigungselement, umfassend:
einen hohlen rohrförmigen Körper (3) mit einem proximalen Ende und einem distalen Ende und einer Mittelachse, der einen Anschlagabschnitt umfasst, der sich an dem distalen Ende radial nach innen erstreckt,
ein hohles Schenkelelement (4), das ein proximales Ende und ein distales Ende aufweist, wobei das hohle Schenkelelement innerhalb des Körpers entlang der Mittelachse des Körpers verschiebbar ist, wobei das hohle Schenkelelement einen Flansch an dem proximalen Ende, einen Gewindeabschnitt an dem proximalen Ende und eine Vielzahl von elastischen Schenkeln an dem distalen Ende aufweist und wobei jeder Schenkel einen Kopf an dem distalen Ende zum Eingreifen mit einem Werkstück aufweist und jeder Schenkel radial nach innen zu der Mittelachse hin vorgespannt ist,
einen Schraubbolzen (2), der ein proximales Ende und ein distales Ende aufweist, mit einem Gewindeabschnitt an dem proximalen Ende zum Eingreifen mit dem Gewindeabschnitt des hohlen Schenkelelements, sodass eine Drehung des Schraubbolzens in eine Richtung das hohle Schenkelelement in eine proximale Richtung entlang der Mittelachse zieht und eine Drehung in die andere Richtung bewirkt, dass sich der Gewindeabschnitt des hohlen Schenkelabschnitts von dem Gewindeabschnitt des Schraubbolzens löst, wobei das distale Ende des Schraubbolzens dazu konfiguriert ist, die Schenkel radial nach außen zu drücken; und
eine Feder (5), die zwischen dem Flansch des hohlen Schenkelelements und dem Anschlagabschnitt des hohlen rohrförmigen Körpers angeordnet ist und dazu konfiguriert ist, das hohle Schenkelelement in eine proximale Richtung in Bezug auf den hohlen rohrförmigen Körper zu drücken, wobei das proximale Ende des Schraubbolzens einen Flansch aufweist, der dazu konfiguriert ist, den Schraubbolzen in Bezug auf den hohlen rohrförmigen Körper in Position zu fixieren, und der hohle rohrförmige Körper eine Schulter aufweist, die dazu angeordnet ist, den Schraubbolzen daran zu hindern, sich in eine distale Richtung zu bewegen, **dadurch gekennzeichnet, dass** der hohle rohrförmige Körper ein Haltemittel (1) aufweist, das dazu konfiguriert ist, mit dem Flansch des Schraubbolzens in Eingriff zu treten und den Schraubbolzen daran zu hindern, sich in eine proximale Richtung zu bewegen.

2. Befestigungselement nach Anspruch 1, wobei der Flansch des hohlen Schenkelelements eine flache Oberfläche senkrecht zu der Mittelachse des Befestigungselements enthält und der Anschlagabschnitt des hohlen rohrförmigen Körpers eine entsprechende flache Oberfläche senkrecht zu der Mittelachse des Befestigungselements aufweist.

3. Befestigungselement nach Anspruch 1 oder Anspruch 2, wobei die distalen Enden der Schenkel sich über das distale Ende des Schraubbolzens hinaus erstrecken, wenn sich das hohle Schenkelelement in der am weitesten distalen Position befindet.

4. Befestigungselement nach einem vorhergehenden Anspruch, wobei die Feder dazu konfiguriert ist, das hohle Schenkelelement in eine Eingriffsposition zu drücken, in der der Gewindeabschnitt des hohlen Schenkelelements mit dem Gewindeabschnitt des Schraubbolzens in Eingriff steht.

5. Befestigungselement nach einem vorhergehenden Anspruch, wobei das hohle Schenkelelement ein Innengewinde aufweist.

6. Befestigungselement nach einem vorhergehenden Anspruch, wobei der Schraubbolzen ein Außengewinde aufweist.

7. Befestigungselement nach einem vorhergehenden Anspruch, wobei der hohle rohrförmige Körper in zwei Teilen ausgebildet ist, einem proximalen Rohr (3a) und einer distalen Kappe (3b), die miteinander verschraubt sind.

8. Befestigungselement nach einem vorhergehenden Anspruch, wobei die Feder eine offene Spiralfeder oder eine Tellerfeder ist.

9. Verfahren zum Befestigen eines Werkstücks unter Verwendung des Befestigungselements nach einem vorhergehenden Anspruch, umfassend:
Durchführen des hohlen Schenkelelements durch eine Öffnung in dem Werkstück; und
Drehen des Schraubbolzens in eine erste Richtung, wobei eine Drehung des Schraubbolzens in die erste Richtung das hohle Schenkelelement in eine proximale Richtung entlang der Mittelachse zieht, bis der Kopf jedes Schenkels des hohlen Schenkelelements mit dem Werkstück in Eingriff tritt.

## Revendications

1. Élément de fixation comprenant :
un corps tubulaire creux (3) avec une extrémité proximale et une extrémité distale et un axe central, comprenant une partie de butée s'étendant radialement vers l'intérieur au niveau de l'extrémité distale,
un élément de patte creux (4) présentant une extrémité proximale et une extrémité distale, l'élément de patte creux pouvant être translaté au sein du corps le long de l'axe central du corps, l'élément de patte creux présentant une bride au niveau de l'extrémité proximale, une partie filetée au niveau de l'extrémité proximale et une pluralité de pattes élastiques au niveau de l'extrémité distale et dans lequel chaque patte présente une tête au niveau de l'extrémité distale en vue de venir en prise avec une pièce de travail, et chaque patte est sollicitée radialement vers l'intérieur en direction de l'axe central,
un boulon (2) présentant une extrémité proximale et une extrémité distale, avec une partie filetée au niveau de l'extrémité proximale en vue de venir en prise avec la partie filetée de l'élément de patte creux, de sorte qu'une rotation du boulon dans une direction tire l'élément de patte creux dans une direction proximale le long de l'axe central et une rotation dans l'autre direction amène la partie filetée de la partie de patte creuse à se libérer de la partie filetée du boulon, dans lequel l'extrémité distale du boulon est conçue pour pousser les pattes radialement vers l'extérieur ; et
un ressort (5) agencé entre la bride de l'élément de patte creux et la partie de butée du corps tubulaire creux et conçu pour pousser l'élément de patte creux dans une direction proximale par rapport au corps tubulaire creux, dans lequel
l'extrémité proximale du boulon présente une bride conçue pour maintenir le boulon en position par rapport au corps tubulaire creux, et le corps tubulaire creux présente un épaulement agencé pour empêcher le boulon de se déplacer dans une direction distale, **caractérisé en ce que** le corps tubulaire creux présente un moyen de retenue (1) conçu pour venir en prise avec la bride du boulon et empêcher le boulon de se déplacer dans une direction proximale.

2. Élément de fixation de la revendication 1, dans lequel la bride de l'élément de jambe creux comprend une surface plate perpendiculaire à l'axe central de l'élément de fixation et la partie de butée du corps tubulaire creux présente une surface plate correspondante perpendiculaire à l'axe central de l'élément de fixation.

3. Élément de fixation de la revendication 1 ou de la revendication 2, dans lequel les extrémités distales des pattes s'étendent au-delà de l'extrémité distale du boulon lorsque l'élément de patte creux se trouve dans la position la plus distale.

4. Élément de fixation d'une quelconque revendication précédente, dans lequel le ressort est conçu pour pousser l'élément de patte creux dans une position de mise en prise où la partie filetée de l'élément de patte creux est mise en prise avec la partie filetée du boulon.

5. Élément de fixation d'une quelconque revendication précédente, dans lequel l'élément de pied creux présente un filetage interne.

6. Élément de fixation d'une quelconque revendication précédente, dans lequel le boulon présente un filetage externe.

7. Élément de fixation d'une quelconque revendication précédente, dans lequel le corps tubulaire creux est formé en deux pièces, un tube proximal (3a) et un capuchon distal (3b), qui sont vissés ensemble.

8. Élément de fixation d'une quelconque revendication précédente, dans lequel le ressort est un ressort hélicoïdal ouvert, ou un ressort à disque.

9. Procédé de fixation d'une pièce de travail à l'aide de l'élément de fixation d'une quelconque revendication précédente, comprenant :
le passage de l'élément de patte creux à travers une ouverture dans la pièce de travail ; et
la rotation du boulon dans une première direction, où une rotation du boulon dans la première direction tire l'élément de patte creux dans une direction proximale le long de l'axe central, jusqu'à ce que la tête de chaque patte de l'élément de patte creux vienne en prise avec la pièce de travail.
